# DEMANDE DE BREVET EUROPEEN

(11) **EP 2 434 352 A1**
(43) Date de publication de la demande: **28.03.2012**
(21) Numéro de dépôt: 11306235.0
(22) Date de dépôt: 27.09.2011
(51) Int. Cl.: G04B 3/06, G04D 7/00, G04D 7/02, F16C 32/06, G01L 5/00

(54) **UNITE DE MESURE DE COUPLE ET/OU D'EFFORT**

(30) Priorité: 28.09.2010 FR 1003831
(71) Demandeur: Socrate Industrie, 25500 Le Belieu (FR)
(72) Inventeur: Petit, Christian, 25500 LE BELIEU (FR)
(74) Mandataire: Demulsant, Xavier

(57) **Abrégé**

Unité **(1)** de mesure d'un couple et/ou d'un effort appliqué à un mécanisme micromécanique, qui comprend :
- Un bâti **(8)** comprenant un palier **(15)** définissant un axe (X) longitudinal,
- Une broche **(32)** comprenant un arbre **(53)** principal monté en translation et/ou en rotation par rapport au palier **(15),** et un mécanisme **(75)** d'accouplement de l'arbre **(53)** audit mécanisme micromécanique ;
- Un capteur **(40)** de couple et/ou un capteur **(95, 96)** d'effort couplé au bâti **(8)** d'une part et à la broche **(32)** d'autre part ;
- Un système **(101)** d'injection d'un fluide à une interface **(54)** entre le palier **(15)** et l'arbre **(53).**

## Description

L'invention a trait au domaine de la métrologie, et plus précisément à la métrologie appliquée aux mécanismes micromécaniques tels que les mouvements d'horlogerie.

La plupart des montres mécaniques à affichage analogique (c'est-à-dire à aiguilles) sont pourvues d'un bouton appelé tirette qui fait saillie latéralement du boîtier. La tirette permet d'effectuer la mise à l'heure et, pour les montres à remontage mécanique, le remontage du mouvement.

Pour les montres à remontage mécanique, le remontage est effectué manuellement par de multiples rotations de la tirette. Pour la mise à l'heure sur la plupart les montres mécaniques, une traction sur la tirette, initialement dans une position rentrée, est d'abord nécessaire pour placer celle-ci dans une position sortie où elle engrène un mécanisme de renvoi accouplé aux aiguilles. Une rotation de la tirette permet alors, via le mécanisme de renvoi, de placer les aiguilles dans la position souhaitée.

Sur les montres mécaniques, la tirette est le composant le plus sollicité, à la fois en traction et en torsion. Compte tenu de la durée de vie attendue des montres à remontage mécanique, relevant aujourd'hui en majorité de l'horlogerie de luxe, les horlogers devraient pouvoir garantir que le remontage sera non seulement fiable et durable, mais également constant au cours du temps.

En outre, l'horloger doit tenir compte, dans sa fabrication, des efforts que l'utilisateur doit exercer sur la tirette, et qui dépendent de plusieurs facteurs, notamment l'importance des forces de frottement internes au mouvement, la qualité de lubrification des pièces en contact, et la force des ressorts du mouvement. L'horloger peut faire varier ces paramètres, par exemple selon que la montre est un modèle pour homme ou un modèle pour femme. Généralement la conception du mouvement, son dimensionnement et sa lubrification relèvent du savoir-faire de l'horloger, qui teste manuellement le mouvement et en déduit les éventuels ajustements qu'il juge nécessaire pour que l'action à effectuer sur la tirette nécessite plus ou moins d'effort de la part de l'utilisateur.

Des tests automatisés sur le mouvement sont cependant connus de longue date. Ainsi, les brevets GB 922 052 et US 2 589 401 proposent des appareils de mesure du couple d'un ressort de mouvement de montre.

Mais ces appareils peinent à se généraliser car ils ont pour inconvénient principal d'avoir une influence non négligeable sur la mesure effectuée, principalement en raison de leur conception, similaire aux mouvements d'horlogerie, et de leurs dimensions, bien souvent supérieures à celles des mouvements. De sorte que la fiabilité des mesures n'est pas supérieure, voire inférieure à celles effectuées manuellement par les horlogers, qui préfèrent en général s'en remettre à leur propre jugement.

Cette situation n'est pas satisfaisante. D'abord parce que le jugement humain, par nature subjectif, ne permet pas de standardiser une production horlogère. Ensuite parce que les tests humains, par nature ponctuels, ne permettent pas d'effectuer des tests d'efforts répétitifs, et ne permettent pas, par conséquent, de garantir la constance du mouvement, c'est-à-dire le maintien de ses performances, résultant de sa résistance au vieillissement (notamment en raison des phénomènes d'usure et de fatigue).

L'invention vise à proposer une solution permettant d'effectuer avec une fiabilité accrue des mesures automatisées, éventuellement répétitives, sur les mécanismes micromécaniques tels que les mécanismes d'horlogerie.

A cet effet, l'invention propose une unité de mesure d'un couple et/ou d'un effort appliqué à un mécanisme micromécanique, qui comprend :
- Un bâti comprenant un palier définissant un axe longitudinal,
- Une broche motorisée comprenant un arbre principal monté en translation et/ou en rotation par rapport au palier, et un mécanisme d'accouplement de l'arbre audit mécanisme micromécanique ;
- Un capteur de couple et/ou un capteur d'effort couplé au bâti d'une part et à la broche d'autre part ;
- Un système d'injection d'un fluide à l'interface entre le palier et l'arbre.

L'injection d'un fluide à l'interface permet de créer un film qui permet de minimiser les frottements de l'arbre contre le palier, et donc de minimiser les effets des composants de l'unité de mesure sur la mesure elle-même.

Selon un mode particulier de réalisation, le palier est muni de deux séries de trous traversants radiaux équidistants respectivement d'une face avant et d'une face arrière libres du palier. Dans chaque trou est par exemple monté un sifflet muni d'un perçage présentant une section conique, ce grâce à quoi l'écoulement du fluide est laminaire et le débit sensiblement constant.

L'arbre peut comprendre une gorge périphérique dans laquelle est reçue une pièce de liaison avec un capteur d'effort, et une série de canaux mettant en communication une face externe de l'arbre, à l'interface, et la gorge périphérique. La gorge périphérique peut être bordée de parois percées de trous dans chacun desquels est monté un sifflet muni d'un perçage présentant une section conique. De même, l'écoulement du fluide est laminaire au niveau de la gorge, et le débit sensiblement constant, ce qui permet de créer un film de fluide entre l'arbre et la pièce de liaison.

Plus précisément, l'arbre peut comprendre une chambre entourant les parois, dans laquelle débouchent les canaux.

L'arbre comprend de préférence une rainure périphérique médiane creusée dans la face externe, équidistante des deux séries de trous, et communiquant avec les canaux.

Quant au mécanisme d'accouplement, il comprend par exemple des mors mobiles en translation transversale, et un système d'actionnement des mors, qui comprend un actionneur d'une tige filetée en prise hélicoïdale avec une noix munie de trous obliques dans lesquelles sont montées coulissantes des tiges solidaires des mors.

Selon un mode de réalisation, la broche comprend :
- un étage moteur, couplé en rotation à un arbre moteur et intégrant un capteur de couple,
- un étage suiveur intégrant l'arbre principal,
- une transmission couplant en rotation l'étage moteur à l'étage suiveur, avec débattement axial.

L'étage moteur comprend par exemple une bielle fixée transversalement sur un arbre élastique du capteur de couple, la bielle définissant à deux extrémités transversales opposées une fourche, et la transmission comprend une paire de bras solidaires de l'arbre par une extrémité avant, et dont une extrémité arrière sphérique est reçue dans une fourche de la bielle.

D'autres objets et avantages de l'invention apparaîtront à la lumière de la description faite ci-après en référence aux dessins annexés dans lesquels :
- la figure 1 est une vue en perspective d'une unité de mesure de couple et/ou d'effort ;
- la figure 2 est une vue en perspective de l'unité de mesure de la figure 1, selon un autre angle de vue ;
- la figure 3 est une vue de côté montrant une broche équipant l'unité de mesure des figures 1 et 2 ;
- la figure 4 est une vue en perspective de la broche de la figure 3 ; dans le cercle est représenté, à échelle agrandie, un détail de la broche ;
- la figure 5 est une vue en coupe horizontale montrant l'unité de mesure des figures 1 et 2, dans une position préparatoire à une mesure d'effort et/ou de couple sur une montre ;
- la figure 6 est une vue en coupe horizontale, à échelle agrandie, d'un détail de l'unité de mesure, selon l'encart VI de la figure 5 ;
- la figure 7 est une vue de détail en coupe verticale de l'unité de mesure, montrant l'alimentation en fluide du palier ;
- la figure 8 est une vue en coupe horizontale montrant l'unité de mesure de la figure 5 dans une position de mesure d'effort et/ou de couple sur la montre ;
- la figure 9 est une vue en perspective de dessous de l'unité de mesure.

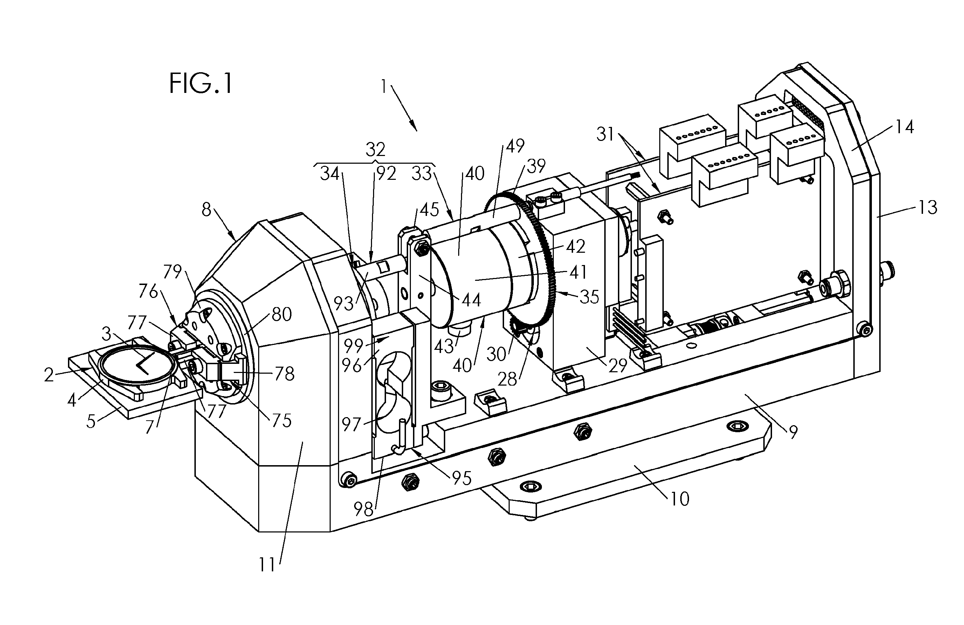

Sur la figure 1 est représentée une unité 1 de mesure d'un couple et/ou d'un effort appliqué sur un mécanisme micromécanique, en l'occurrence un mouvement d'horlogerie d'une montre 2 à affichage analogique (c'est-à-dire à aiguilles 3).

La montre 2 comprend un boîtier 4, monté sur un support 5 de mesure fixe, un mécanisme de renvoi accouplé aux aiguilles 3, et une tirette 6 munie d'un bouton 7 moleté (ou cannelé) faisant saillie latéralement du boîtier 4.

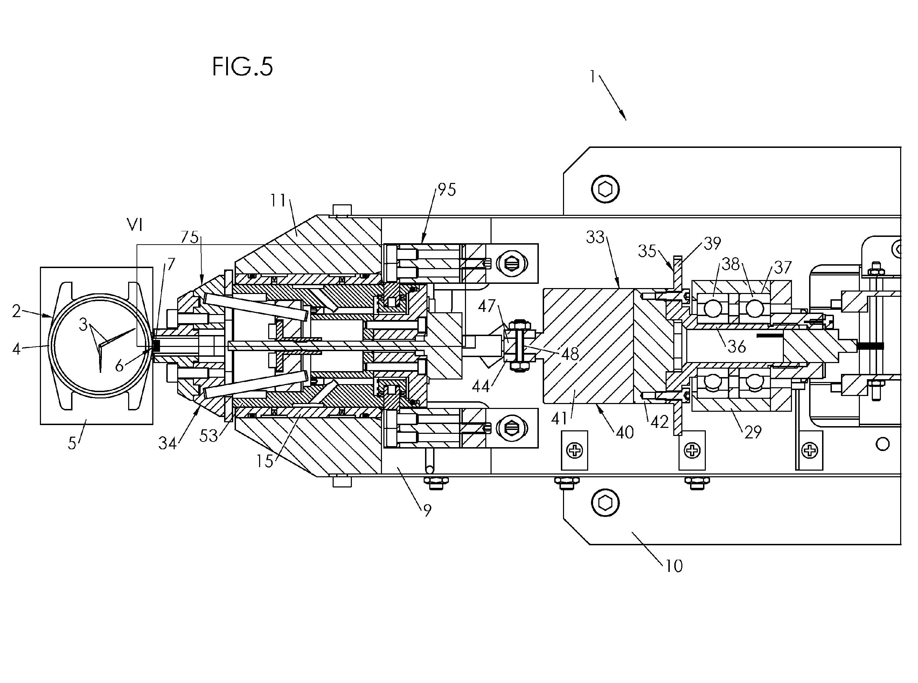

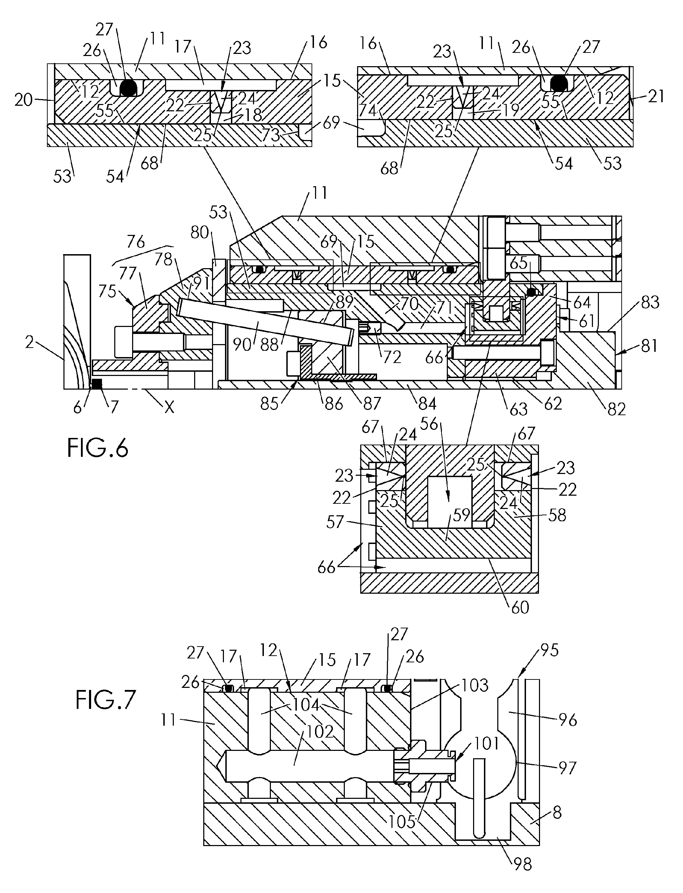

La tirette 6 est montée déplaçable en translation par rapport au boîtier 4 entre :
- une position rentrée, visible sur la figure 5, où le bouton **7** jouxte le boîtier **4** et où la tirette **6** est désaccouplée du mécanisme de renvoi et peut être tournée sans effet sur les aiguilles **3,** et
- une position sortie représentée sur la figure 6 où le bouton **7** est écarté du boîtier **4** et où la tirette **6** est accouplée au mécanisme de renvoi et où la rotation du bouton **7** permet de faire tourner les aiguilles **3** via le mécanisme de renvoi.

L'unité **1** de mesure comprend, en premier lieu, un bâti **8** de préférence métallique (par exemple en acier ou en fonte, ou encore en alliage d'aluminium) muni d'une embase **9** montée coulissante, suivant une direction longitudinale, sur une platine **10** fixe (montée par exemple sur un marbre sur lequel est également fixé le support **5** de mesure). Le bâti **8** comprend par ailleurs, à une extrémité avant, une potence **11** munie d'un alésage **12** définissant un axe X longitudinal et, à une extrémité arrière, un flasque **13.** La potence **11** et le flasque **13** font saillie perpendiculairement de la platine **10** et sont tous deux munis d'un épaulement **14** périphérique propre à recevoir un capot (non représenté) venant fermer le volume défini entre l'embase **9,** la potence **11** et le flasque **13.**

L'unité **1** de mesure comprend, en deuxième lieu, un palier **15** sous forme d'une chemise métallique (par exemple en acier ou en bronze) reçue dans l'alésage **12.** Le palier **15** est monté serré dans l'alésage **12,** coaxialement à celui-ci.

Comme cela est visible sur la figure 6, le palier **15** est muni sur une face externe **16** de deux gorges **17** périphériques médianes. Au fond des gorges **17** sont percées deux séries périphériques de trous traversants, à savoir une série de trous avant **18** et une série de trous arrière **19.**

Comme cela est visible sur la figure 6, la distance entre les trous avant **18** et une face avant **20** du palier **15,** située à l'air libre, et la distance entre les trous 19 arrière et une face arrière **21** du palier **15,** également située à l'air libre, sont égales. La fonction de cette configuration sera expliquée ci-après.

Dans chaque trou **18, 19** est monté serré un sifflet **22** muni d'un perçage **23** fraisé comprenant une section amont **24** conique, suivie d'une section aval **25** cylindrique d'un diamètre de l'ordre du centième de millimètre. La fonction des sifflets **22** sera également expliquée ci-après.

De part et d'autre des gorges **17** sont creusées deux rainures **26** périphériques externes, dans chacune desquelles est monté un joint torique **27** assurant l'étanchéité aux fluides (gaz, liquides) de l'interface entre l'alésage **12** et le palier **15.**

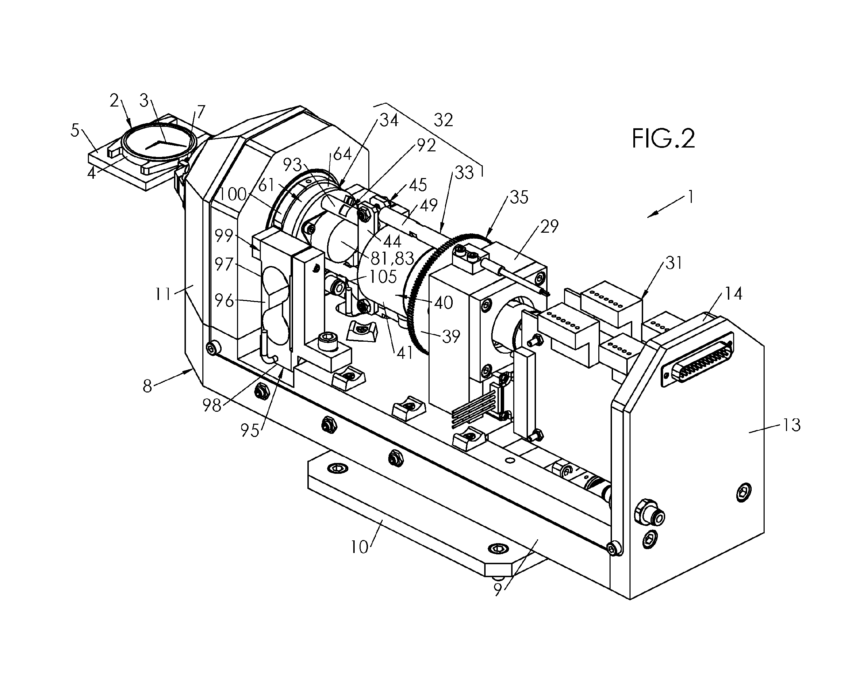

L'unité **1** de mesure de mesure comprend, en troisième lieu, un arbre moteur **28** monté en rotation dans un bloc support **29** intermédiaire et muni, à une extrémité avant, d'un pignon **30** dépassant du bloc support **29** vers l'avant. L'arbre moteur **28** est couplé à un moteur électrique piloté par une électronique **31** de commande comprenant des cartes de circuits imprimés montées à l'arrière de l'unité **1** de mesure entre le bloc support **29** et le flasque **13,** comme cela est visible sur les figures 1 et 2.

L'unité **1** de mesure comprend, en quatrième lieu, une broche **32** à deux étages coaxiaux, à savoir :
- un étage **33** moteur, situé à l'arrière de la broche **32** et monté en rotation dans le bloc support **29,** et
- un étage **34** suiveur, situé à l'avant de la broche **32,** et monté en rotation dans la potence **11.**

L'étage moteur **33** comprend une fusée **35** ayant :
- une section arrière conformée en un moyeu **36** monté en rotation (sans possibilité de translation) dans un alésage **37** du bloc support **29,** avec interposition d'une paire de roulements **38,** comme cela est bien visible sur la figure 5,
- une partie avant conformée en une roue **39** dentée qui s'étend hors du bloc support **29,** à l'avant de celui-ci, comme cela est bien visible sur les figures 1 et 5, et qui engrène le pignon **30** de l'arbre moteur **28.**

L'étage moteur **33** comprend par ailleurs un capteur **40** de couple (également appelé couplemètre) comportant un arbre **41** élastique en torsion. A l'arrière, le couplemètre **40** est solidaire de la fusée **35** par l'intermédiaire d'une bride **42** fixée à la fusée **35** par exemple par vissage. Le couplemètre **40** est statique, c'est-à-dire que l'arbre **41** et la bride **40** ne sont pas montés en rotation l'un par rapport à l'autre, le seul degré de liberté étant la rotation à faible débattement angulaire de l'arbre, dû à sa propre élasticité. Le couplemètre intègre des moyens (par exemple électromagnétiques) de mesure de la torsion de l'arbre **41,** et il est muni d'une prise **43** pour le branchement d'un câble électrique d'alimentation et de transmission de la mesure de torsion. Ce type de couplemètre est connu. On pourra par exemple utiliser un couplemètre du type commercialisé par la société SCAIME sous la référence DH15. Ce type de couplemètre permet d'effectuer des mesures de couple dans la gamme de 0,02 Nm à 20 Nm avec une précision de l'ordre de 0,2%.

L'étage moteur **33** comprend en outre une bielle **44** double conformée à deux extrémités transversales diamétralement opposées, en une fourche **45** munie de deux pattes **46** parallèles en regard. La bielle **44** est fixée transversalement par son centre à une extrémité avant de l'arbre **41.** L'arbre **41** est à cet effet muni à une extrémité avant d'un axe **47** s'étendant axialement en saillie, sur lequel est emmanchée la bielle **44** avec insertion d'une goupille **48** d'arrêt qui solidarise en rotation la bielle **44** à l'arbre **41** du couplemètre **40.**

Ainsi, la rotation de l'arbre moteur **28** entraine, via le pignon **30** et la roue dentée **39,** la rotation du couplemètre **40,** avec cependant un décalage angulaire de l'arbre **41** (dû à son élasticité en torsion) par rapport à la roue **39.**

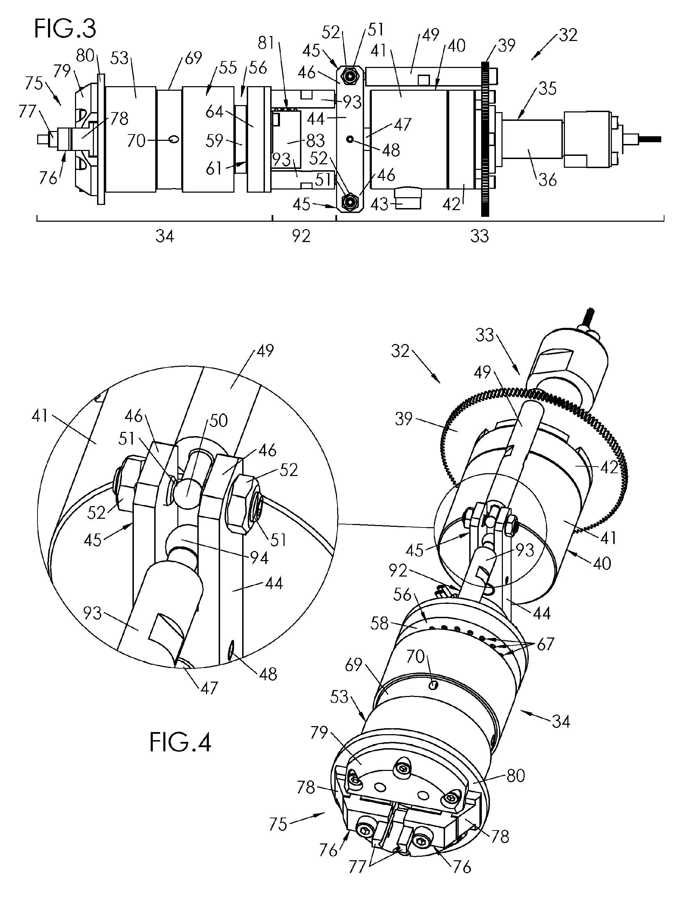

L'étage moteur **33** comprend, enfin, un limiteur **49** angulaire sous forme d'une tige qui s'étend parallèlement à l'axe X longitudinal. La tige **49** est solidaire, par une extrémité arrière, de la roue **39** à la périphérie de laquelle elle est fixée par exemple par vissage. A une extrémité avant, la tige **49** est conformée en une sphère **50** logée dans une fourche **45.** Plus précisément, comme cela est bien visible dans le cercle de détail de la figure 4, la sphère 50 est reçue entre deux butées **51** latérales réglables, formées par exemple par deux vis sans têtes vissées dans les pattes **46** et maintenues en position au moyen de contre-écrous **52.**

La tige **49** a pour fonction de limiter la torsion de l'arbre **41** élastique en limitant angulairement la rotation relative de la bielle **44** autour de l'axe X par rapport à la roue **39** dès lors que la sphère **50** vient au contact de l'une des butées latérales **51.** Le positionnement des butées latérales **51** permet de régler l'angle de rotation limite. Il est toutefois possible de s'affranchir de la limitation angulaire de la torsion en démontant la tige **49.**

L'étage suiveur **34** de la broche **32** comprend un arbre **53** principal cylindrique, creux, monté dans le palier **15** avec entre eux une interface **54** définissant un faible jeu périphérique, de quelques centièmes de millimètres, ou de préférence de quelques microns. L'arbre **53** est monté en libre rotation dans le palier **15.** L'arbre **53** est également monté en translation longitudinale dans le palier **15,** avec un débattement axial de l'ordre de quelques millimètres.

Comme cela est visible sur la figure 6 (et plus particulièrement dans le cercle de détail inférieur), à une extrémité arrière dépassant du palier **15,** l'arbre **53** est creusé, sur une face externe **55** cylindrique, d'une gorge **56** annulaire délimitée axialement par deux parois annulaires en regard, à savoir une paroi avant **57** et une paroi arrière **58,** reliées au fond de la gorge **56** par une section **59** cylindrique qui, vers l'intérieur, définit un alésage **60.**

L'arbre **53** est fermé, à l'arrière, par une culasse **61** qui est solidaire de l'arbre **53** en étant fixé à lui au moyen d'une série périphérique de vis. La culasse **61** est percée d'un alésage **62** axial ; elle présente en section un profil sensiblement en T, et comprend une section avant **63** tubulaire, qui est reçue dans l'alésage **60,** et une section arrière **64** annulaire, qui vient s'emmancher dans l'extrémité arrière de l'arbre **53** avec interposition d'un joint **65** torique d'étanchéité aux fluides. Comme cela est visible sur la figure 6, l'extrémité arrière de l'arbre **53** et la culasse **61** sont configurées pour définir ensemble une chambre 66 annulaire à section en U entourant les parois **57, 58** et la section cylindrique **59.** Chaque paroi **57, 58** est percée d'une série périphérique de trous **67** traversants dans chacun desquels un sifflet **22** est monté serré.

Comme illustré sur la figure 6, l'arbre **53** comprend, creusée dans sa face **55** externe en regard d'une face interne **68** du palier **15** sur laquelle débouchent les trous **18, 19,** une rainure **69** périphérique médiane qui communique, via une série de canaux 70 percés en biais, avec une série d'alésages **71** qui, à une extrémité avant, sont obturés par des bouchons **72** et, à une extrémité arrière, débouchent dans la chambre **66** annulaire.

Lorsque l'arbre **53** est monté dans le palier **15,** la rainure **69** est située sensiblement à égale distance, mesurée longitudinalement, entre les deux séries de trous **18, 19** du palier **15.** En outre, la largeur de la rainure **69** est telle que :
- la distance entre un bord avant **73** de la rainure **69** et les trous avant **18** est inférieure à la distance entre les trous avant **18** et la face avant **20** libre du palier **15 ;** selon un mode de réalisation préféré illustré sur la figure 6, le rapport entre ces deux distances est de deux environ ;
- de même, la distance entre un bord arrière **74** de la rainure **69** et les trous arrière **19** est inférieure à la distance entre les trous arrière **19** et la face arrière **21** libre du palier **15 ;** selon un mode de réalisation préféré illustré sur la figure 6, le rapport entre ces deux distance est de deux environ.

La fonction de cette configuration sera expliquée ci-après.

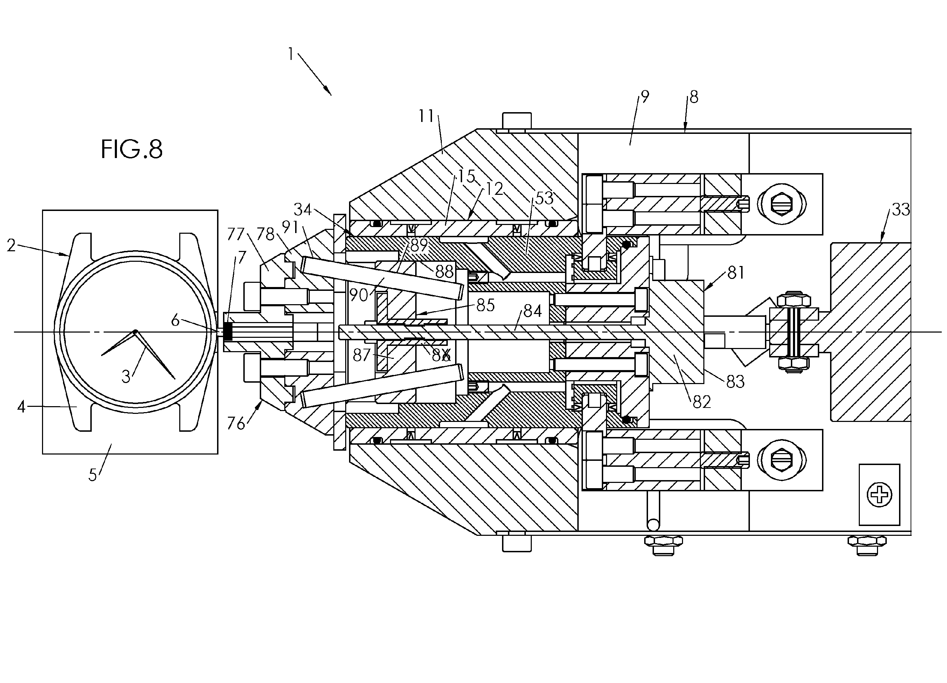

Comme cela est bien visible sur les figures 5, 6 et 8, l'étage suiveur **34** comprend un mécanisme **75** d'accouplement de l'arbre 53 au mécanisme micromécanique de la montre **2.** Ce mécanisme d'accouplement **75** se présente, en l'espèce, sous forme d'un mécanisme de préhension du bouton **7.**

Ce mécanisme **75** comprend, à l'avant et en dehors de l'arbre **53,** une paire de mors **76** montés coulissants transversalement par rapport à l'arbre **53.** Plus précisément, chaque mors **76** comprend, à l'avant, un doigt **77** de préhension et, à l'arrière, un coulisseau **78** solidaire du doigt **77** et monté en translation transversale sur une bride **79.** La bride **79** est fixée à l'arbre **53** au moyen d'une série périphérique de vis, avec interposition d'une entretoise **80** annulaire qui forme butée d'arrêt pour limiter la course linéaire axiale de l'arbre **53** (et donc de l'étage suiveur **34).**

Le mécanisme de préhension **75** inclut en outre un système d'actionnement des mors, qui comprend :
- un actionneur **81** coaxial à l'arbre **53,** cet actionneur **81** étant muni d'un moteur rotatif monté dans un carter **83** fixé à l'arrière de la culasse **61,** et d'une tige filetée **84** entraînée en rotation par le moteur **83** et s'étendant longitudinalement vers l'avant à partir du carter **83** et au travers de l'alésage **62** et de l'arbre **53 ;**
- une noix **85** comprenant une douille **86** filetée en prise hélicoïdale avec la tige filetée **84,** et un disque **87** solidaire de la douille **86** à laquelle il est fixé au moyen d'une série périphérique de vis. Le disque **87** est guidé axialement par un alésage **88** formé dans l'arbre **53,** et il est pourvu d'une paire de perçages **89** obliques traversants, symétriques diamétralement par rapport à l'axe X (la douille **86** et le disque **87** sont ici deux pièces distinctes, mais ils pourraient former un composant monobloc) ;
- une paire de tiges **90** obliques qui s'étendent au travers de l'alésage **88.** Par une extrémité avant les tiges **90** sont rigidement fixées à chacun des mors **76** en étant emmanchées à force dans un perçage **91** oblique formé dans une face arrière de chaque coulisseau **78,** et par une extrémité arrière les tiges **90** sont emmanchées avec jeu (c'est-à-dire avec une possibilité de coulissement) dans chaque perçage oblique **89.**

Le mécanisme de préhension **75** fonctionne de la manière suivante. A partir d'une position écartée illustrée sur les figures 5 et 6, dans laquelle la noix **85** est située au fond de l'alésage **88,** et où les mors **76** sont espacés transversalement l'un de l'autre et libèrent le bouton 7, la rotation de la tige **84** entraînée par le moteur **82** de l'actionneur **81** dans le sens antihoraire (ou au contraire dans le sens horaire si le pas de vis de la tige **84** et de la noix **85** est à gauche) provoque l'avancée de la noix **85** qui, à la manière d'une came, force le rapprochement des tiges **90** obliques, lesquelles font coulisser les mors **76** transversalement en direction l'un de l'autre, jusqu'à une position rapprochée illustrée sur la figure 6, où les doigts **77** sont en contact périphérique avec le bouton **7.** Le mouvement du mécanisme **75** est bien entendu réversible à partir de la position rapprochée, pour permettre inversement la libération du bouton **7.**

L'étage moteur **33** et l'étage suiveur **34** sont couplés en rotation au moyen d'une transmission **92** comprenant une paire de bras **93** longitudinaux décalés transversalement par rapport à l'axe X. Chacun des bras **93** est rigidement fixé à l'arbre **53** (par l'intermédiaire de la culasse **61)** par une extrémité avant. A une extrémité arrière, chaque bras **93** est conformé en une sphère **94** logée dans une fourche **45,** sans jeu (ou avec un faible jeu) angulaire, la sphère **94** étant latéralement en contact ponctuel avec chacune des pattes **46** (ou au moins avec l'une d'entre elles au cours de la rotation de la bielle **44),** avec possibilité toutefois de débattement axial.

L'unité 1 de mesure comprend, en cinquième lieu, un système **95** de mesure des efforts axiaux appliqué à l'étage suiveur **34** de la broche **32.** Ce système **95** comprend une paire de capteurs 96 d'efforts sous forme de poutres ajourées (formant des zones **97** affaiblies déformables en flexion) du type décrit dans le brevet européen EP 0 337 953 (Scaime), dont une extrémité inférieure **98** est encastrée dans l'embase **9,** et dont une extrémité supérieure **99** est fixée à une bague **100** annulaire.

La bague **100** est logée dans la gorge **56** annulaire de l'arbre **53,** avec de part et d'autre, en regard de chaque paroi **57, 58,** un jeu axial de l'ordre de quelques centièmes de millimètres, ou de préférence de l'ordre de quelques microns.

De manière connue, les poutres **96** sont munies de jauges de contraintes fixées au droit des zones affaiblies des poutres.

L'unité 1 de mesure comprend, en sixième lieu, un système **101** d'injection d'un fluide sous pression (tel qu'un liquide ou, de préférence un gaz, notamment de l'air) à l'interface **54** entre le palier **15** et l'arbre **53.** Comme illustré sur la figure 7, ce système **101** d'injection comprend un réseau de canaux percés dans la potence **11,** à savoir :
- un conduit **102** principal percé axialement dans la potence **11,** et débouchant sur une face arrière 103 de celle-ci ;
- deux conduits **104** secondaires percés transversalement au travers de la potence **11,** débouchant à une extrémité inférieure dans le conduit principal **102** et à une extrémité supérieure dans l'alésage **12 ;**

Le système **101** d'injection comprend en outre un raccord **105** vissé à l'embouchure du conduit principal **102,** permettant le branchement d'une tubulure externe pour la mise sous pression de l'interface **54** via le réseau de canaux **102, 104.**

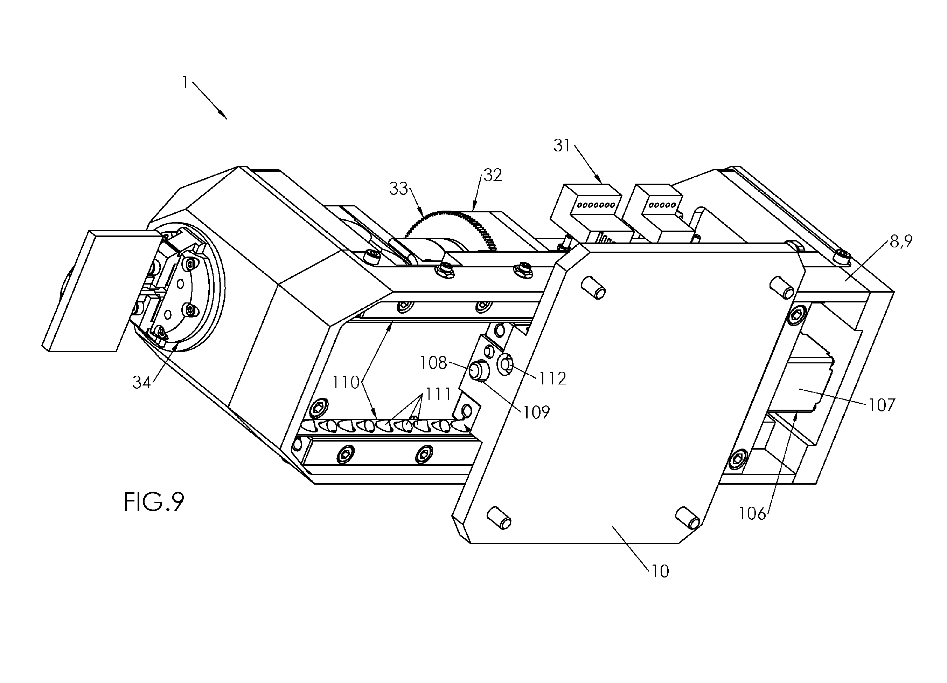

Comme illustré sur la figure 9, l'unité 1 de mesure comprend, en septième lieu, une motorisation **106** linéaire, pilotée par l'électronique **31,** pour commander le déplacement en translation du bâti **8** par rapport à la platine **10.** Cette motorisation **106,** située sous le bâti **8,** comprend un moteur **107** fixé au bâti **8,** entraînant en rotation une vis sans fin 108 longitudinale en prise avec un alésage **109** fileté formé dans la platine **10.**

Le bâti **8** est muni d'une paire de cages **110** linéaires à rouleaux **111.** Ces cages **110** s'étendent longitudinalement de part et d'autre latéralement de la platine **10.** Les rouleaux **111** sont montés en série, en rotation par rapport à chaque cage **110** autour d'axes inclinés à 45° par rapport à l'horizontale, et ce de manière alternée comme cela est visible sur la figure 9.

La motorisation **106** inclut également un capteur **112** linéaire de position permettant de situer le bâti **8** par rapport à la platine **10** le long de l'axe X.

L'unité **1** de mesure fonctionne de la manière suivante, une fois la montre **2** positionnée sur son support **5** de mesure.

L'étage suiveur **34** de la broche **32** est tout d'abord mis sous pression fluidique sous le contrôle de l'électronique **31** de commande. A cet effet, l'électronique **31** commande par exemple l'ouverture d'une électrovanne sur le circuit d'alimentation fluidique, en amont du raccord **105.** Le fluide (de préférence de l'air) est injecté sous pression, via le réseau de canaux **102, 104,** à l'interface **54** entre le palier **15** et l'arbre 53.

Plus précisément, le fluide s'écoule tout d'abord dans les gorges périphériques **17** du palier **15,** sans possibilité d'échappement à l'interface entre le palier **15** et l'alésage **12** en raison des joints **27** d'étanchéité.

Puis, sous la pression, le fluide circule au travers des sifflets **22** dont le perçage **23** a une double fonction : premièrement, assurer une régulation du débit de fluide de manière que ce débit soit sensiblement constant et uniforme sur toute la périphérie du palier **15 ;** deuxièmement, assurer, grâce à la forme conique de la section amont **24,** un écoulement laminaire du fluide dans la direction radiale pour éviter toute turbulence.

Le fluide envahit alors l'interface **54,** où il crée un film. Grâce à ce film de fluide (ou coussin d'air), le montage de l'arbre **53** dans le palier **15** est flottant, et les frottements à l'interface **54** sont minimisés et deviennent négligeables au regard de l'effort et/ou du couple à mesurer.

Grâce au débit constant et uniforme du fluide sur la périphérie du palier **15,** et grâce à l'absence de turbulence dans son écoulement, le film de fluide se comporte de manière statique (ou quasi-statique) en régime permanent (après le régime transitoire de mise sous pression), c'est-à-dire qu'il est en équilibre mécanique, les efforts qu'il exerce sur les pièces avec lesquelles il est en contact (en l'espèce le palier **15** et l'arbre **53)** étant constants.

Ces efforts sont, d'une part, les efforts radiaux dus à la pression, qui tendent à éloigner la face externe **55** de l'arbre et la face interne **68** du palier **15** et, d'autre part, les efforts axiaux dus aux frottements du fluide en écoulement contre les surfaces **55, 68** précitées.

Compte tenu de la symétrie de l'interface **54** (les trous des deux séries **18, 19** sont équidistants des faces libres respectivement avant **20** et arrière **21** du palier **15,** mais également équidistants de la rainure 69 médiane de l'arbre **53),** l'écoulement du fluide à l'interface **54** est lui aussi symétrique, de sorte que les efforts axiaux du fluide sur les surfaces **55, 68** de l'arbre **53** et du palier **15** se compensent. Au total, la somme de ces efforts est sensiblement nulle et l'écoulement du fluide est sans effet sur les mouvements axiaux de l'arbre **53** par rapport au palier **15**.

Il résulte également de la symétrie de l'interface **54** et de l'écoulement quasi-statique du fluide que l'épaisseur du film est sensiblement constante, ce qui garantit une parfaite coaxialité de l'arbre **53** par rapport au palier **15.**

Comme nous l'avons déjà expliqué, la distance entre chaque série de trous **18, 19** et la rainure **69** est inférieure (de moitié environ dans l'exemple illustré sur la figure 6) à la distance séparant chaque série de trous **18, 19** des faces libres, respectivement avant **20** et arrière **21,** du palier **15.** Le fluide s'écoule donc préférentiellement des trous **18, 19** (c'est-à-dire des sifflets **22)** vers la rainure **69.** Plus précisément, en supposant comme dans l'exemple illustré que la longueur du trajet entre les trous **18, 19** et la rainure **69** est égale à la moitié environ du trajet entre les trous **18, 19** et les faces libres (respectivement avant **20** et arrière **21)** du palier **15,** le débit du fluide circulant des trous **18, 19** à la rainure **69** est égal environ au double du débit du fluide circulant des trous **18, 19** aux faces libres **20, 21** du palier **15,** ce qui facilite la mise sous pression de la rainure **69,** des canaux **70,** des alésages **71** et, in fine, de la chambre **66.** Le fluide parvenant aux faces libres **20, 21** du palier **15** s'écoule à l'air libre, assurant ainsi le maintien des pressions.

La chambre **66** est mise sous pression de manière sensiblement uniforme, compte tenu de l'absence d'obstacles sur le trajet d'écoulement du fluide, et compte tenu notamment de la section relativement importante de l'espace annulaire défini entre l'alésage 60 à l'arrière de l'arbre **61** et la section avant **63** cylindrique de la culasse **61.**

Le fluide s'écoule depuis la chambre **66** vers la gorge **56** au travers des sifflets **22** montés dans les trous **67.** Grâce à leur forme, et pour les mêmes raisons qu'exposé précédemment, les sifflets **22** régulent le débit de fluide et assurent son écoulement laminaire de la chambre 66 à l'interface entre les parois annulaires **57, 58** et la bague **100,** le fluide formant ainsi un film d'épaisseur et de pression constantes de part et d'autre de la bague **100.** Les efforts exercés par le fluide de part et d'autre de la bague **100** se compensent donc, de sorte que la bague est montée flottante dans la gorge **56,** sans frottement de contact. Le fluide s'écoule ensuite radialement à l'air libre de part et d'autre de la bague 100.

Une fois l'étage suiveur **34** de la broche **32** sous pression fluidique, en régime permanent, l'arbre **53** est monté flottant à la fois radialement dans le palier **15,** et axialement par rapport à la bague **100.**

L'électronique **31** commande alors l'accouplement de l'étage suiveur **34** au mécanisme de la montre **2,** c'est-à-dire, en pratique, le serrage du bouton **7** au moyen des mors **76.** A cet effet, l'actionneur **81** commande la rotation de la tige **84** filetée pour déplacer la noix **85,** et translater transversalement les mors **76** en direction l'un de l'autre jusqu'à ce qu'ils enserrent le bouton **7** dans la position rapprochée.

Pour effectuer une mesure des efforts linéaires à appliquer au bouton **7** pour le déplacer de sa position rentrée à sa position sortie, l'électronique **31** commande l'activation de la motorisation **106** pour provoquer le déplacement linéaire du bâti 8 par rapport à la platine **10,** dans une direction l'éloignant de la montre **2,** sur une distance équivalente à la course de débattement de la tirette 6 (de l'ordre du millimètre).

Le mouvement linéaire du bâti **8** se transmet à l'étage suiveur **34** par l'intermédiaire des poutres 96 ancrées dans l'embase 9, et de la bague **100** fixée à l'extrémité supérieure des poutres **96.** La transmission du déplacement de la bague **100** à l'arbre **53** se fait sans contact, compte tenu du flottement de la bague **100** dans la gorge **56.**

Le bouton **7** étant solidaire en translation de l'étage suiveur **34** de la broche **32,** sa résistance à son passage de sa position rentrée à sa position sortie se transmet à l'étage suiveur **34** (et donc à l'arbre **53).** L'étage suiveur **34** oppose donc au mouvement linéaire qui lui est transmis par la bague **100** une résistance égale à la résistance du bouton **7.**

Il en résulte une flexion des poutres **96,** dont l'amplitude est proportionnelle à la déformation des jauges de contraintes associées à celles-ci. La mesure de la déformation des jauges permet donc d'en déduire l'effort résistant du bouton **7,** égal à l'effort minimal nécessaire à son déplacement. Il est à noter que cette procédure s'applique tant à la traction qu'à la poussée (c'est-à-dire au passage du bouton **7** de sa position rentrée à sa position sortie, ou inversement).

L'étage suiveur **34** de la broche **32** n'entraîne pas dans sa translation l'étage moteur **33,** les sphères **94** des bras **93** de transmission glissant dans les fourches **45** de la bielle **44.**

Afin par ailleurs d'effectuer une mesure du couple à appliquer au bouton **7** pour lui imprimer une rotation, soit pour remonter le mouvement de la montre **2,** soit pour effectuer une mise à l'heure de celle-ci par rotation des aiguilles **3,** la broche **32** est entraînée en rotation par l'arbre moteur **28.**

L'arbre moteur **28** entraîne la rotation de la fusée **35** (et donc de l'ensemble de l'étage moteur **33,** incluant le couplemètre et la bielle **44** qui lui est solidaire) via l'engrenage pignon 30-roue **39.** Cette rotation est transmise à l'étage suiveur **34** via les bras **93** de transmission, entraînés en rotation de manière symétrique par la rotation de la bielle **44.**

Le bouton **7** étant solidaire en rotation de l'étage suiveur **34** de la broche **32,** sa résistance à sa propre rotation se transmet à l'étage suiveur **34** (et donc à l'arbre **53** et aux bras de transmission **93** qui lui sont solidaires). L'étage suiveur **34** oppose donc au mouvement de rotation qui lui est transmis par l'étage moteur **33** (via les bras **93)** un couple résistant égal au couple résistant du bouton **7.** Ce couple résistant est transmis à la bielle **44** (et donc à l'arbre **41** du couplemètre **40)** par les bras de transmission **93,** au niveau des sphères **94.** Il en résulte une torsion de l'arbre élastique **41** du couplemètre **40,** dont l'angle est proportionnel au couple résistant. La mesure de cet angle de torsion permet par conséquent de calculer le couple résistant opposé par le bouton **7,** égal au couple minimal nécessaire à sa rotation.

Les mesures du couple et de l'effort de traction peuvent être effectuées indépendamment, séparément, ou encore simultanément ou de manière combinée.

Bien que l'unité **1** de mesure ait été décrite équipée de capteurs de couple et d'efforts linéaires, elle peut n'être équipée que du capteur de couple **40** ou que du système **95** de mesure d'efforts linéaires, la structure de l'étage suiveur **34** de la broche **32** restant inchangée.

Cette structure, en particulier la configuration du palier **15** et de l'arbre **53,** décrite en détail ci-dessus, permet d'obtenir des mesures d'une grande fiabilité et d'une grande précision du couple et/ou des efforts appliqués sur un organe mobile en rotation et/ou en translation-en l'espèce un bouton **7** de montre. En effet, grâce au film de fluide quasi-statique, les forces de frottement, tant en rotation qu'en translation, sont quasiment inexistantes, de sorte que les mesures effectuées ne sont pas (ou peu) affectées par les composants de l'unité **1** de mesure elle-même.

En outre, cette absence de frottement entre pièces mobiles et pièces fixes de l'unité **1** permet d'effectuer des mesures répétées (plusieurs milliers d'itérations, simulant la durée de vie moyenne d'une montre, et même au-delà) sans variation ni dérive qui serait due à une éventuelle usure mécanique des pièces de l'unité **1,** l'usure étant pour ainsi dire inexistante. Il en résulte également une grande durée de vie de l'unité **1** de mesure.

## Revendications

1. Unité **(1)** de mesure d'un couple et/ou d'un effort appliqué à un mécanisme micromécanique, **caractérisée en ce qu'**elle comprend :
- un bâti **(8)** comprenant un palier **(15)** définissant un axe (X) longitudinal,
- une broche **(32)** comprenant un arbre **(53)** principal monté en translation et/ou en rotation par rapport au palier **(15),** et un mécanisme **(75)** d'accouplement de l'arbre **(53)** audit mécanisme micromécanique ;
- un capteur **(40)** de couple et/ou un capteur **(95, 96)** d'effort couplé au bâti **(8)** d'une part et à la broche **(32)** d'autre part ;
- un système **(101)** d'injection d'un fluide à une interface **(54)** entre le palier **(15)** et l'arbre **(53).**

2. Unité **(1)** de mesure selon la revendication 1, **caractérisée en ce que** le palier **(15)** est muni de deux séries de trous **(18, 19)** traversants radiaux équidistants respectivement d'une face avant (20) et d'une face arrière **(21)** libres du palier **(15).**

3. Unité (1) de mesure selon la revendication 2, **caractérisée en ce que** dans chaque trou **(18, 19)** est monté un sifflet **(22)** muni d'un perçage **(23)** présentant une section **(24)** conique.

4. Unité **(1)** de mesure selon la revendication 2 ou la revendication 3, **caractérisée en ce que** l'arbre **(53)** comprend une gorge **(56)** périphérique dans laquelle est reçue une pièce **(100)** de liaison avec un capteur **(96)** d'effort, et une série de canaux **(70, 71)** mettant en communication une face **(55)** externe de l'arbre (53), à l'interface **(54),** et la gorge **(56)** périphérique.

5. Unité (1) de mesure selon la revendication 4, **caractérisée en ce que** la gorge **(56)** périphérique est bordée de parois **(57, 58)** percées de trous **(67)** dans chacun desquels est monté un sifflet (22) muni d'un perçage **(23)** présentant une section **(24)** conique.

6. Unité (1) de mesure selon la revendication 5, **caractérisée en ce que** l'arbre **(53)** comprend une chambre **(66)** entourant les parois **(57, 58),** dans laquelle débouchent les canaux **(71).**

7. Unité **(1)** de mesure selon l'une des revendications 4 à 6, **caractérisée en ce que** l'arbre **(53)** comprend une rainure **(69)** périphérique médiane creusée dans la face **(54)** externe, équidistante des deux séries de trous **(18, 19),** et communiquant avec les canaux.

8. Unité **(1)** de mesure selon l'une des revendications précédentes, **caractérisée en ce que** le mécanisme **(75)** d'accouplement comprend des mors **(76)** mobiles en translation transversale, et un système d'actionnement des mors, qui comprend un actionneur **(81)** d'une tige **(84)** filetée en prise hélicoïdale avec une noix **(85)** munie de trous **(89)** obliques dans lesquels sont montées coulissantes des tiges **(90)** solidaires des mors **(76).**

9. Unité **(1)** de mesure selon l'une des revendications précédentes, **caractérisée en ce que** la broche **(32)** comprend :
- un étage **(33)** moteur, couplé en rotation à un arbre **(28)** moteur et intégrant un capteur **(40)** de couple,
- un étage **(34)** suiveur intégrant l'arbre **(53)** principal,
- une transmission **(92)** couplant en rotation l'étage moteur **(33)** à l'étage suiveur **(34),** avec débattement axial.

10. Unité **(1)** de mesure selon la revendication 9, **caractérisée en ce que** l'étage moteur **(33)** comprend une bielle **(44)** fixée transversalement sur un arbre **(41)** élastique du capteur **(40)** de couple, la bielle **(44)** définissant à deux extrémités transversales opposées une fourche **(45),** et **en ce que** la transmission **(92)** comprend une paire de bras **(93)** solidaires de l'arbre **(53)** principal par une extrémité avant, et dont une extrémité arrière **(94)** sphérique est reçue dans une fourche **(45)** de la bielle **(44)**.
